Europäisches Patentamt

European Patent Office

Office européen des brevets

(11) Numéro de publication: **0 193 694**
**B1**

# FASCICULE DE BREVET EUROPEEN

(45) Date de publication du fascicule du brevet: **16.01.91**

(21) Numéro de dépôt: **85810087.8**

(22) Date de dépôt: **04.03.85**

(51) Int. Cl.⁵: **B 62 D 21/00,** B 62 D 31/00, B 60 S 9/14

(54) **Châssis d'un véhicule à moteur à 3 ou 4 roues qui permet de le stationner sur une surface la plus petite possible, soit avec son axe le plus long en position verticale.**

(43) Date de publication de la demande:
**10.09.86 Bulletin 86/37**

(45) Mention de la délivrance du brevet:
**16.01.91 Bulletin 91/03**

(84) Etats contractants désignés:
**AT BE CH DE FR GB IT LI**

(56) Documents cités:
**CH-A- 426 510**
**FR-A-2 314 091**
**US-A-3 031 023**

(73) Titulaire: **de Vallière, Yves**
**Brunnadernstrasse 33**
**CH-3006 Berne (CH)**

(72) Inventeur: **de Vallière, Yves**
**Brunnadernstrasse 33**
**CH-3006 Berne (CH)**

Courier Press, Leamington Spa, England.

EP 0 193 694 B1

# Description

L'invention concerne le châssis ou la carrosserie autoportante de petits véhicules à moteur destinés au transport de personnes, de préférence des monoplaces carrossés à 3 ou 4 roues. Il s'agit de concevoir un châssis qui permet à la fois de réduire la hauteur de la silhouette du véhicule au maximum et de stationner le véhicule sur la surface la plus petite possible, donc de pouvoir le basculer sur sa surface arrière, puis de ranger le véhicule dans cette position entre les autres. Le châssis inventé a la particularité de permettre de parquer le véhicule sur deux roues auxiliaires et un appui escamotable, de sorte que son axe le plus long soit en position approximativement verticale, les roues utilisées pour circuler ne touchant plus le sol. En plus, il permet de déplacer le véhicule à la main dans cette position sur de courtes distances dans le sens de la largeur du véhicule tout en le dirigeant, afin de réduire l'espace de manoeuvre. Enfin, le châssis est conçu de façon à protéger le conducteur contre les autres usagers de la route, car il est surélevé par rapport à la caisse. (La réduction maximale de la hauteur du véhicule réduit l'aire de stationnement et permet de passer par les portes ou le charger dans un fourgon. Cette réduction n'est possible qu'à condition de faire conduire le véhicule par un pilote en position horizontale).

Les documents FR-A-2314091 et US-A-3031023 montrent des véhicules qui peuvent être stationnés sur la surface la plus petite possible en position verticale, sur l'arrière ou l'avant. Cependant, la construction du châssis dans le document US-A-3031023 est très compliquée et réalisée avec un moteur hydraulique supplémentaire. L'autre construction selon le brevet FR-A-231409 qui montre les caractéristiques de la première partie de la première revendication a une stabilité faible dans la position basculée.

Par rapport à cet état de la technique l'objectif de la présente invention est de réaliser un châssis de véhicule qui peut être déplacé facilement à la main dans la position basculée et qui a une stabilité améliorée dans sa position basculée.

L'objectif de la présente invention est de réduire au maximum la surface prise par un nombre donné de véhicules à quatre roues stationnés, sans recourir à des moyens externes au véhicule. Ceci est réalisable en prévoyant qu'un siège par véhicule et à condition de parquer le véhicule avec son axe le plus long en position verticale, serré contre l'autre véhicule. Ce n'est qu'après avoir trouvé la solution à ce problème que la monoplace carrossée à 4 roues qui est un véhicule offrant plus de sécurité que les véhicules à deux roues se propagera fortement. Ceci permettra de réaliser de substantiels progrès dans le trafic urbain pour un bombre donné de véhicule à 4 roues, soit: Réduction de la surface perdue pour parquer et possibilité de transporter par train des véhicules à 4 roues sur de grandes distances à peu de frais. A cela, ajoutons les avantages propres à la profusion de monoplaces à 4 roues remplacant les deuxièmes voitures favorablement: La réduction de la pollution de l'air, car le poids mort est plus faible que pour une voiture ordinaire, la sécurité des piétons augmente et les commercants urbains seront heureux de voir revenir leur clientèle féminine, etc.

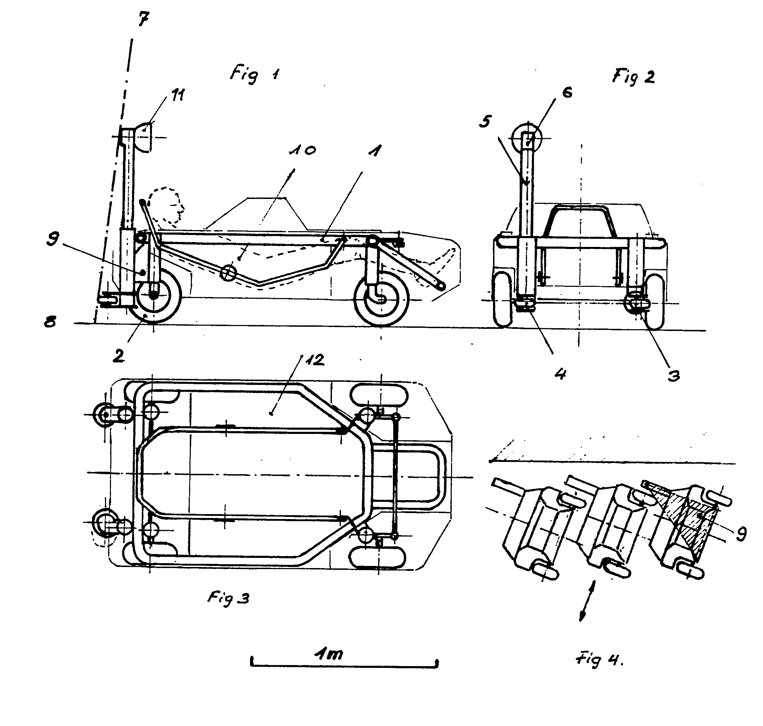

Le dessin représente un exemple d'exécution: Fig. 1 est une coupe vue en élévation, Fig. 2 une vue de l'arrière, Fig. 3 une vue en plan d'un châssis d'un monoplace qui fait l'objet de la présente invention. En traits fins le contour de la carrosserie est esquissé et en pointillé le conducteur en position pratiquement horizontale, ce qui réduit la hauteur du véhicule. Dans la Fig. 1, on voit bien à quelle hauteur le châssis (1) est aménagé par rapport au corps du conducteur (10) pour le protéger et aux roues (2), puis la position très basse des deux roues auxiliaires (3, 4) aménagées à l'arrière, ainsi que leur position très rapprochées aux roues arrières utilisées pour circuler, afin de réduire le poids à soulever lorsque l'on bascule le véhicule pour le parquer. L'appui escamotable (5) aboutit dans un pied (6) qui détermine avec les deux roues auxiliaires l'aire de stationnement du véhicule. Le plan de stationnement (7) n'est pas parfaitement perpendiculaire au plan de circulation (8), afin d'assurer une certaine stabilité du véhicule en position de stationnement. Notons la position du centre de gravité (9) du véhicule vide: Il est le plus près possible du point de contact des roues auxiliaires avec le sol, afin de réduire l'effort nécessaire pour basculer le véhicule en position de stationnement. Vu de l'arrière, Fig. 2, on constate que l'appui de stationnement se situe de préférence du côté du trafic. A l'extrémité, on aura avantage d'aménager un phare, éventuellement amovible et un feu de position. En plus, on y incorporera les clignaotants, antenne et surtout une bouche d'air par laquelle on aspirera de l'air destiné au pilote, afin qu'il ne souffre pas des gaz d'échappement des autres véhicules. Au bas de l'appui une roue auxiliaire fixe est aménagée. De l'autre côté, nous trouvons l'autre roue auxiliaire pivotante qui permet de diriger le véhicule lorsqu'on le déplace en le tenant en position verticale. La vue en plan, Fig. 3 montre le coffre (12) à bagage de chaque côté, protégé par le châssis surélevé (1). Fig. 4 montre comment l'on enchevètre les monoplaces sur une aire de stationnement et pourquoi l'appui est de préférence escamotable: On peut mieux dégager un véhicule des autres l'avoisinant.

## Revendications

1. Châssis d'un véhicule à moteur à 3 ou 4 roues qui permet de le stationner sur la surface la plus petite possible, c'est-à-dire avec son axe le plus long en position verticale et qui est muni de deux roues auxiliaires folles (3, 4) montées à l'arrière, utilisées uniquement pour stationner le véhicule en position verticale, les roues (2) utilisées pour circuler ne touchant alors plus le sol caractérisé par le fait que l'une des deux roues auxiliaires (3, 4) a un axe fixe perpendiculaire au plan de circulation de la voiture et l'autre un axe pivotant, afin de permettre de ranger le véhicule à la main dans le sens de sa largeur en le dirigeant, ce qui réduit la surface nécessaire à la manoeuvre pour stationner le véhicule et par le fait que le châssis comporte un appui, de préférence escamotable, aménagé à l'arrière de la voiture dirigé vers le haut et situé dans un plan parallèle à la direction de l'axe du véhicule, cet appui comportant à son extrêmité supérieure un pied qui détermine avec le deux roues auxiliaires le plan et le polygone de sustention du véhicule en stationnement.

2. Châssis selon revendication 1 réunissant tous les organes pesants à l'arrière, de sorte que le centre de gravité (9) du véhicule vide soit aussi près que possible des roues auxiliaires, ceci afin de permettre de basculer facilement à la main le véhicule en position verticale pour le stationner.

3. Châssis selon revendication 1 dont l'appui sert de bouche d'air destiné au conducteur, afin de le protéger des gaz d'échappement des autres véhicules.

4. Châssis selon revendication 1 dont l'appui porte un phare et des clignoteurs de préférence amovibles, ce qui permet aux autres usagers de la route de constater qu'une voiture à une place avec silhouette particulièrement basse circule à côté d'eux.

## Patentansprüche

1. Fahrgestell eines drei bwz. vierrädrigen Motorfahrzeuges, das das Parkieren auf die kleinstmögliche Fläche gestattet, d.h. so, dass die Längsachse vertikal zu stehen kommt und das zu diesem Zweck zwei freie Hilfsräder am hinteren Ende des Fahrzeuges aufweist, wobei dann die Räder, die zum Fahren benützt werden vom Boden abgehoben sind, einerseits dadurch gekennzeichnet, dass das eine Hilfsrad eine feste Achse hat, die vertikal zur Fahrebene ist und das andere eine schwenkbare Achse hat, sodass damit beim Parkieren das senkrecht gehaltene Fahrzeug in beliebiger Richtung gedreht und geschoben werden kann, was die notwendige Manövrierfläche für das Parkieren beträchtlich vermindert und anderseits durch die zweckmässigerweise einziehbare Stütze am hinteren Fahrzeugende, die beim parkierten Fahrzeug parallel zu dessen Längsachse wirkt, wobei die Stehfläche durch die beiden Hilfsräder und das Stützenende bestimmt wird.

2. Fahrgestell gemäss Anspruch 1, gekennzeichnet durch die Lage sämtlicher schwerer Bestandteile in Nähe der Hilfsräder, sodass der Schwerpunkt des leeren Fahrzeuges möglichst weit hinten liegt und so das Heben von Hand des Vorderteiles beim Parkieren erleichtert wird.

3. Fahrgestell gemäss Anspruch 1, gekennzeichnet durch die Verwendung der hohlen Stütze als Luftstutzen durch den die Luft für den Lenker gesaugt wird, sodass er nicht von den Abgasen der anderen Fahrzeugen belästigt wird.

4. Fahrgestell gemass Anspruch 1, gekennzeichnet durch eine abnehmbare Einheit an der Spitze der Stütze, die das Fernlicht und die Blinker enthält, sodass die anderen Lenker bemerken, dass en besonders niedriges Fahrzeug neben ihnen fährt.

## Claims

1. Frame of a motorized vehicle with three or four Wheels which enables parking on the smallest possible surface, namely with its longest dimension in a vertical position and which is equiped with two auxiliary wheels at the rear serving exclusively to park the car in a vertical position, when the wheels used to circulate are off the ground, characterized by the fact that one of the auxiliary wheels has a fixed axle, perpendicular to the ground when circulating, the other a pivoting axle, so that it is possible to manouever the vertical vehicle during parking, so that the surface needed for parking is substantially reduced and by the fact that the frame comprises a preferably retractable strut at the rear end of the vehicle which acts in the direction of the axle of the vehicle when it is parked so that it is steadied on three points.

2. Frame according to claim 1, characterized by the concentration of all the heavy elements at the rear of the vehicle so that the location of the centre of gravity of the empty vehicle is as near as possible to the auxiliary wheels and facilitates the tilting up of the vehicle by hand to park it.

3. Frame according to claim 1, characterized by the strut used as air-intake for the driver, so that he is protected against fumes of other vehicles.

4. Frame according to claim 1, where the strut carries at the top the headlight and signals in a preferably removable unit, which allows other drivers to notice that another vehicle with a particularly low structure is circulating alongside.

Fig 1

Fig 2

Fig 3

Fig 4.

1m